# EUROPÄISCHE PATENTANMELDUNG

(11) **EP 2 811 598 A1**
(43) Veröffentlichungstag der Anmeldung: **10.12.2014**
(21) Anmeldenummer: 14163118.4
(22) Anmeldetag: 02.04.2014
(51) Int. Cl.: H02G 3/12

(54) **Elektrisches/elektronisches Installationsgerät**

(30) Priorität: 07.06.2013 DE 102013105893
(71) Anmelder: Berker GmbH & Co. KG, 58579 Schalksmühle (DE)
(72) Erfinder: Richter, Michael, 58579 Schalksmühle (DE)

(57) **Zusammenfassung**

Es wird ein elektrisches/elektronisches Installationsgerät der Gebäudesystemtechnik vorgeschlagen, mit einem die zur Funktion notwendigen Bauteile aufnehmenden, mit einer Designplatte 14 ausrüstbaren Grundmodul 1, dem ein, zumindest ein verstellbares Betätigungsglied 2 aufweisendes Betätigungsmodul 3 zugeordnet ist, wobei das Grundmodul 1 eine, mit mehreren elektrischen Schaltelementen bestückte elektrische Leiterplatte 5 aufweist, und wobei das Grundmodul 1 über eine Befestigungsvorrichtung wieder entnehmbar in einer Installationsdose 6 festlegbar ist. Zu dem Zweck, ein elektrisches/elektronisches Installationsgerät zu schaffen, welches hinsichtlich der Festlegung in und der Entnahme aus der zugehörigen Installationsdose 6 besonders einfach und komfortabel zu handhaben ist, besteht die Befestigungsvorrichtung einerseits aus einem, zumindest einen Lagerbock 7 und zumindest eine Lagerbockaufnahme 8 aufweisenden Schwenklager und andererseits aus einer, zumindest zwei gegenläufig entgegen Federkraft verstellbaren Riegeln 9, zumindest zwei Riegelfallen 10 und einen Betätigungsmechanismus 11 aufweisende Verriegelungseinrichtung.

## Beschreibung

Die vorliegende Erfindung geht von einem gemäß Oberbegriff des Hauptanspruches konzipierten elektrischen/elektronischen Installationsgerät aus.

Derartige elektrische/elektronische Installationsgeräte sind oftmals als Schaltgeräte ausgeführt und in der Regel dafür vorgesehen, die Ein- und Ausschaltung eines Stromkreises bzw. die Umschaltung von einem auf einen anderen Stromkreis zu bewirken. Außerdem sind solche elektrischen/elektronischen Installationsgeräte oftmals auch als sogenannte Türkommunikationsgeräte ausgeführt und zur Bedienung der Klingel bzw. Türsprechanlage eines Gebäudes vorgesehen. Bei solchen elektrischen/elektronischen Installationsgeräten können die unterschiedlichsten Kontaktsysteme bzw. elektrischen Schaltelemente Verwendung finden. Die Betätigung solcher elektrischer/elektronischer Installationsgeräte kann z. B. durch das Verstellen eines z. B. als Taste, Wippe usw. ausgebildeten Betätigungsgliedes von einer Ausgangsposition in eine oder mehrere Funktionsstellungen erfolgen, wobei die Funktionsstellungen z. B. tastend ausgeführt sein können. Oftmals sind solche elektrischen/elektronischen Installationsgeräte zur Installation in Installationsdosen vorgesehen, wobei die zur Verwendung kommenden Befestigungsvorrichtungen, wie z. B. Spreizkrallen, Schraubverbindungen usw. dafür vorgesehen sind, eine einfache Festlegung und bei Bedarf eine einfache Entnahme solcher elektrischer/elektronischer Installationsgeräte zu ermöglichen.

Ein dem Oberbegriff des Hauptanspruches entsprechendes elektrisches/elektronisches Installationsgerät ist durch die DE 20 2008 015 052 U1 bekannt geworden. Dieses als Schaltgerät ausgebildete elektrische/elektronische Installationsgerät besteht im Wesentlichen aus einem die zur Funktion notwendigen elektrischen/elektronischen Bauteile aufnehmenden Grundmodul, dem ein zumindest ein verstellbares Betätigungsglied aufweisendes Betätigungsmodul zugeordnet ist. Das Grundmodul weist eine mit mehreren elektrischen Schaltelementen bestückte elektrische Leiterplatte auf, wobei die elektrischen Schaltelemente dem zumindest einen Betätigungsglied zugeordnet sind und wobei dem Grundmodul ein rückseitig an einer Installationswand zur Anlage kommender Designrahmen (Designplatte) zugeordnet ist. Das Grundmodul ist dazu vorgesehen, wie bei solchen elektrischen/elektronischen Installationsgeräten üblich, über eine Befestigungsvorrichtung in einer Installationsdose festgelegt zu werden. Die Befestigung und im Bedarfsfalle die Entnahme solchermaßen ausgestalteter elektrischer/elektronischer Installationsgeräte ist jedoch mühsam und zeitaufwendig, was unter heutigen Installationsgesichtspunkten insbesondere bei hochwertigen elektrischen/elektronischen Installationsgeräten nicht mehr zeitgemäß ist.

Der vorliegenden Erfindung liegt deshalb die Aufgabe zugrunde ein elektrisches/elektronisches Installationsgerät zu schaffen, welches hinsichtlich der Festlegung in und der Entnahme aus der zugehörigen Installationsdose besonders einfach und komfortabel zu handhaben ist.

Diese Aufgabe wird durch die im kennzeichnenden Teil des Hauptanspruches angegebenen Merkmale gelöst.

Bei einem solchermaßen ausgebildeten elektrischen/elektronischen Installationsgerät ist besonders vorteilhaft, dass die Festlegung in der Installationsdose völlig werkzeuglos durch ein einfaches Einschwenken bei automatischer Verriegelung erfolgt. Bei der Entnahme ist zum Lösen der Verriegelungseinrichtung lediglich ein handelsüblicher Schraubendreher notwendig, welcher die Verriegelung durch einfaches gradliniges Einsetzen in den Betätigungsmechanismus löst. Danach kann das elektrische/elektronische Installationsgerät ohne weiteres Zutun einfach aus der Installationsdose entnommen werden.

Weitere vorteilhafte Ausgestaltungen sind in den Unteransprüchen angegeben. Anhand zweier in den Zeichnungen dargestellter Ausführungsbeispiele sei der erfindungsgemäße Gegenstand näher erläutert. Dabei zeigen:
- Fig. 1:: prinziphaft eine Explosionsdarstellung des elektrischen/elektronischen Installationsgerätes gemäß erstem Ausführungsbeispiel, in Zuordnung einer Installationsdose in räumlicher Darstellung;
- Fig. 2:: prinziphaft eine Draufsicht eines gemäß Fig. 1 ausgebildeten elektrischen/elektronischen Installationsgerätes, mit demontierter oberer Blende des Betätigungsmoduls, um einen Zugang zum Betätigungsmechanismus der Verriegelungseinrichtung zu schaffen;
- Fig. 3:: prinziphaft einen Vollschnitt des in Fig. 2 dargestellten elektrischen/elektronischen Installationsgerätes entsprechend der Linie A-A;
- Fig. 4:: prinziphaft das elektrische/elektronische Installationsgerät gemäß erstem Ausführungsbeispiel räumlich, in drei Montageschritten zur Festlegung in einer Installationsdose;
- Fig.5:: prinziphaft ein Betätigungsmodul eines elektrischen/elektronischen Installationsgerätes, räumlich in Explosionsdarstellung;
- Fig.6:: prinziphaft ein Grundmodul eines elektrischen/elektronischen Installationsgerätes, räumlich in Explosionsdarstellung;
- Fig. 7:: prinziphaft eine Explosionsdarstellung des elektrischen/elektronischen Installationsgerätes gemäß zweitem Ausführungsbeispiel, in Zuordnung einer Installationsdose in räumlicher Darstellung.

Wie aus den Figuren hervorgeht, besteht ein solches elektrisches/elektronisches Installationsgerät im Wesentlichen aus zumindest einem, die zur Funktion notwendigen elektrischen/elektronischen Bauteile aufnehmenden Grundmodul 1, dem ein, zumindest ein verstellbares Betätigungsglied 2 aufweisendes Betätigungsmodul 3 zugeordnet ist. Jedes Grundmodul 1 weist eine mit mehreren elektrischen Schaltelementen bestückte elektrische Leiterplatte 5 auf, wobei zumindest ein elektrisches Schaltelemente zumindest einem Betätigungsglied 2 des am Grundmodul 1 gehaltenen Betätigungsmoduls 3 zugeordnet ist. Die Grundmodule 1 sind zur Festlegung in einer Installationsdose 6 vorgesehen. Zur Festlegung der Grundmodule 1 in der Installationsdose 6 ist eine Befestigungsvorrichtung vorgesehen, die einerseits einen Lagerbock 7 und eine damit in Wirkverbindung stehende Lagerbockaufnahme 8 zur Bildung eines Schwenklagers aufweist. Andererseits weist die Befestigungsvorrichtung zwei gegenläufig entgegen Federkraft verstellbare Riegel 9, zwei Riegelfallen 10 und einen Betätigungsmechanismus 11 zur Bildung einer Verriegelungseinrichtung auf.

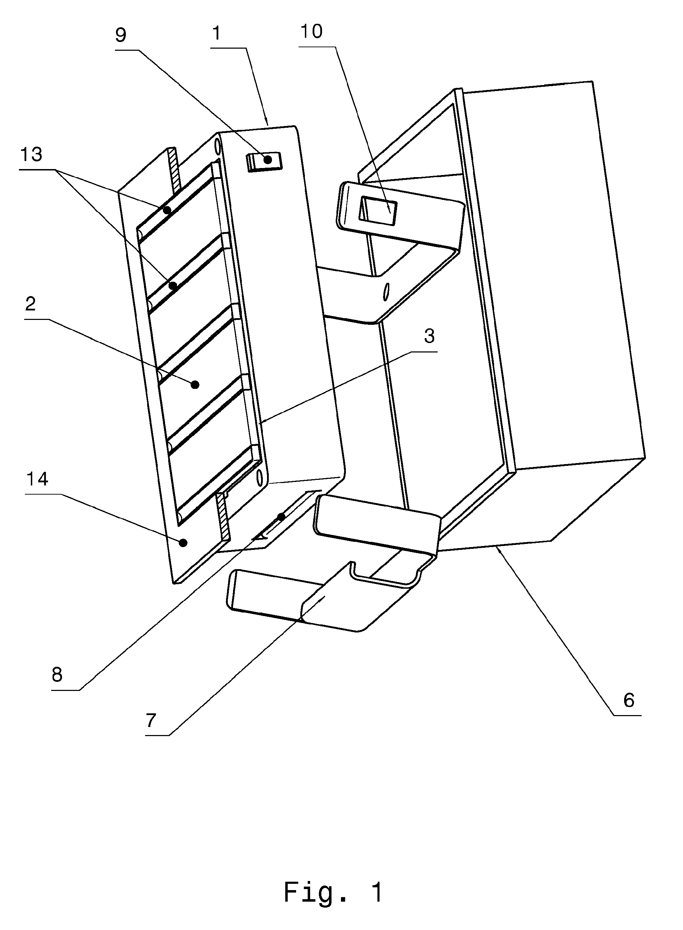

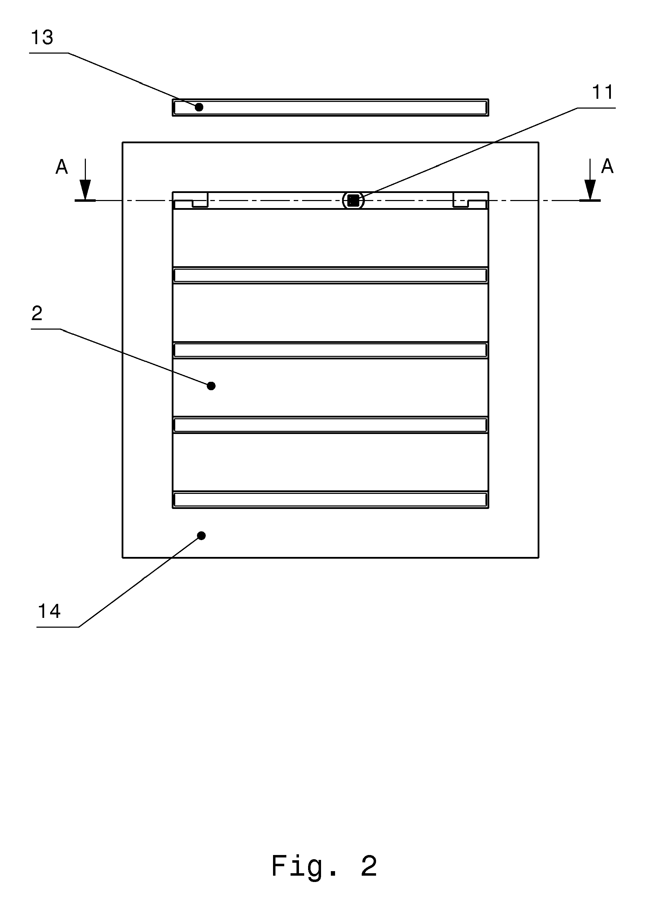

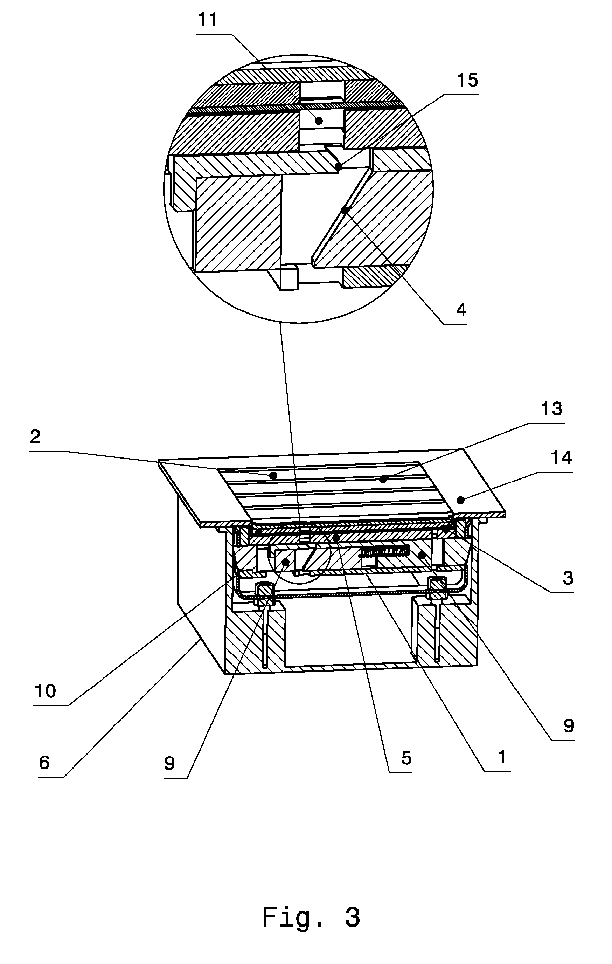

Wie des Weiteren insbesondere aus den Figuren 1 bis 6 hervorgeht, ist ein Lagerbock 7 vorgesehen, der an der Installationsdose 6 befestigt ist. Die mit dem Lagerbock 7 in Wirkverbindung kommende Lagerbockaufnahme 8 ist am Grundmodul 1 vorhanden. Der Lagerbock 7 ist als separat an der Installationsdose 6 festlegbares, aus Blech hergestelltes erstes Stanzbiegeteil ausgeführt und weist ein schneidenartig ausgeführtes Lagerelement auf. Dieses schneidenartig ausgeführte Lagerelement wirkt mit der einstückig im Grundmodul 1 vorhandenen Lagerbockaufnahme zusammen, welche nutartig ausgebildet ist. Die beiden gegenläufig entgegen Federkraft einer Schraubendruckfeder verstellbaren Riegel 9 sind verschieblich am Grundmodul 1 gelagert und wirken jeweils mit einer Riegelfalle 10 zusammen, die an der Installationsdose 6 befestigt sind. Die beiden Riegelfallen 10 sind als Durchbrüche ausgeführt, welche in einem separat an der Installationsdose 6 festlegbaren, aus Blech hergestellten zweiten Stanzbiegeteil vorhanden sind.

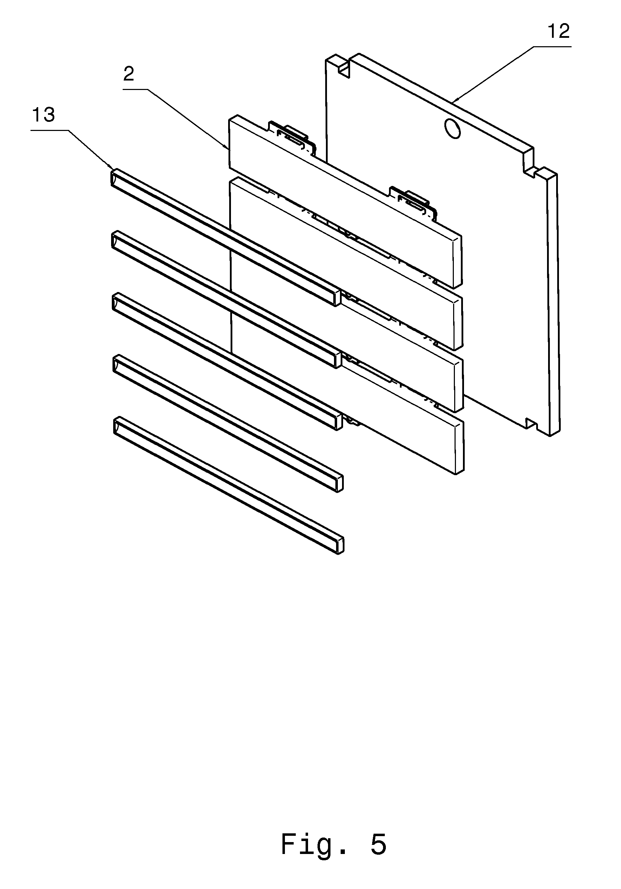

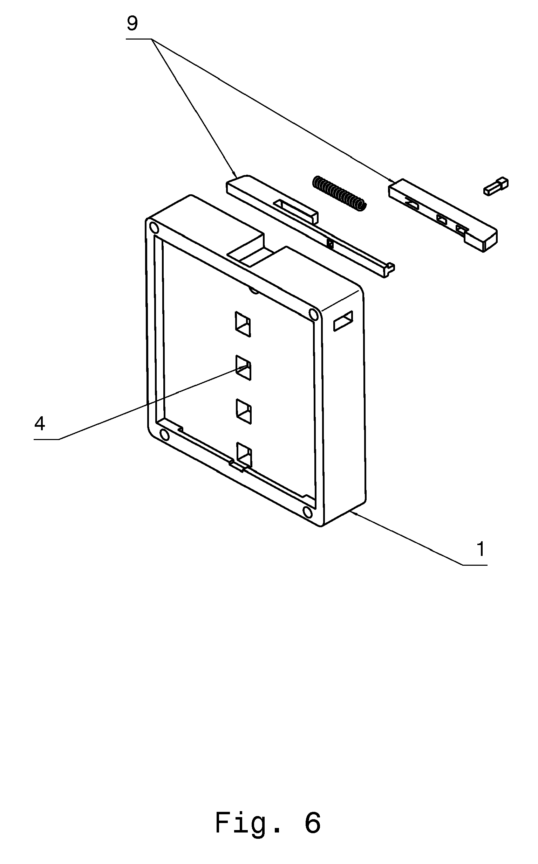

Wie insbesondere aus Figur 1 und Figur 5 hervorgeht, besteht das Betätigungsmodul 3 aus einer, haltend mit dem Grundmodul 1 verbindbaren Funktionsplatte 12, vier verstellbar an der Funktionsplatte 12 gehaltenen, mit einem der vier elektrischen Schaltelemente zusammenwirkenden Betätigungsglied 2 und fünf, an der Funktionsplatte 12 festlegbaren Blenden 13. Wie insbesondere aus Figur 6 hervorgeht, ist der Betätigungsmechanismus 11 der Verriegelungseinrichtung durch das Betätigungsmodul 3 verdeckt am Grundmodul 1 angeordnet. Dabei besteht der Betätigungsmechanismus 11 aus einer, an den einen der beiden Riegel 9 angeformten Abschrägung 4 und einer, an den anderen der beiden Riegel 9 angeformten Abstützfläche 15. Wichtig ist dabei, dass die zum Betätigungsmechanismus 11 gehörigen Öffnungen in der Funktionsplatte 12 und im Gehäuse des Grundmoduls 1 maßlich eng auf den zur Betätigung einzuführenden Schraubendreher abgestimmt sind. Der Zugang zum Betätigungsmechanismus 11 der Verriegelungseinrichtung wird durch eine zumindest teilweise erfolgende Demontage des Betätigungsmoduls 3 freigegeben. Beim vorliegenden Ausführungsbeispiel muss lediglich die obere Blende 13 des Betätigungsmoduls 3 demontiert werden, um einen einfachen Zugang zum Betätigungsmechanismus 11 zu ermöglichen.

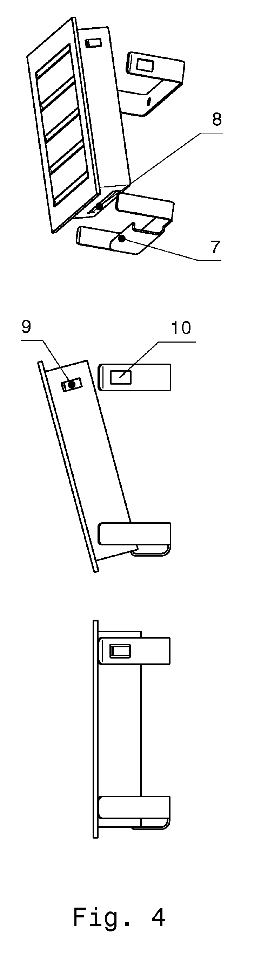

Es ist somit ein elektrisches/elektronisches Installationsgerät realisiert, welches hinsichtlich der Festlegung in und der Entnahme aus der zugehörigen Installationsdose 6 besonders einfach und komfortabel zu handhaben ist. Wie insbesondere aus Figur 4 hervorgeht, braucht zur Festlegung in der Installationsdose 6 braucht das elektrische/elektronische Installationsgerät lediglich mit seiner nutartig ausgebildeten Lagerbockaufnahme 8 auf das schneidenartige Lagerelement des Lagerbocks 7 aufgesetzt und anschließend in die Installationsdose 6 eingeschwenkt werden. Automatisch erfolgt durch die Verriegelungseinrichtung eine Festlegung des elektrischen/elektronischen Installationsgerätes in der Installationsdose 6, weil die beiden entgegen Federkraft verstellbaren Riegel 9 nach erfolgtem Verschwenkvorgang in ihre zugehörigen Riegelfallen 10 eingreifen. Das elektrische/elektronische Installationsgerät ist somit auf einfache Art und Weise sicher in der Installationsdose 6 gehalten. Zur Entnahme ist lediglich die Verriegelung der beiden Riegel 9 zu lösen, um dann das elektrische/elektronische Installationsgerät ebenfalls durch eine Schwenkbewegung auf einfache Art und Weise wieder aus der Installationsdose 6 entnehmen zu können. Um die Verriegelung der beiden Riegel 9 lösen zu können, muss lediglich der Zugang zum Betätigungsmechanismus 11 freigemacht werden, was durch einfaches Entfernen der oberen Blende 13 des Betätigungsmoduls vorgenommen werden kann. Dann ist zum Lösen der Verriegelungseinrichtung lediglich ein handelsüblicher Schraubendreher notwendig, welcher die Verriegelung durch einfaches gradliniges Einsetzen in den Betätigungsmechanismus 11 löst. Danach kann, wie bereits beschrieben, das elektrische/elektronische Installationsgerät ohne weiteres Zutun einfach aus der Installationsdose 6 entnommen werden. Beim vorstehend beschriebenen ersten Ausführungsbeispiel ist lediglich ein einziges elektrisches/elektronisches Installationsgerät dargestellt, an welchem eine Designplatte 14 befestigt ist. Ohne den Gegenstand der Erfindung zu verlassen, kann die Designplatte 14 jedoch auch dazu benutzt werden, dass zwei, drei oder vier Grundmodule 1, jeweils ausgerüstet mit einem Betätigungsmodul 3, zu einer Geräteanordnung zusammengefasst werden. Eine solche Geräteanordnung kann dann, wie vorstehend für das in den Zeichnungen dargestellte erste Ausführungsbeispiel beschrieben, durch eine einfache Schwenkbewegung in die Installationsdose 6 eingesetzt und entnommen werden. Die dazu notwendigen Handlungen sind dieselben, wie bei dem in den Figuren 1 bis 6 näher dargestellten ersten Ausführungsbeispiel.

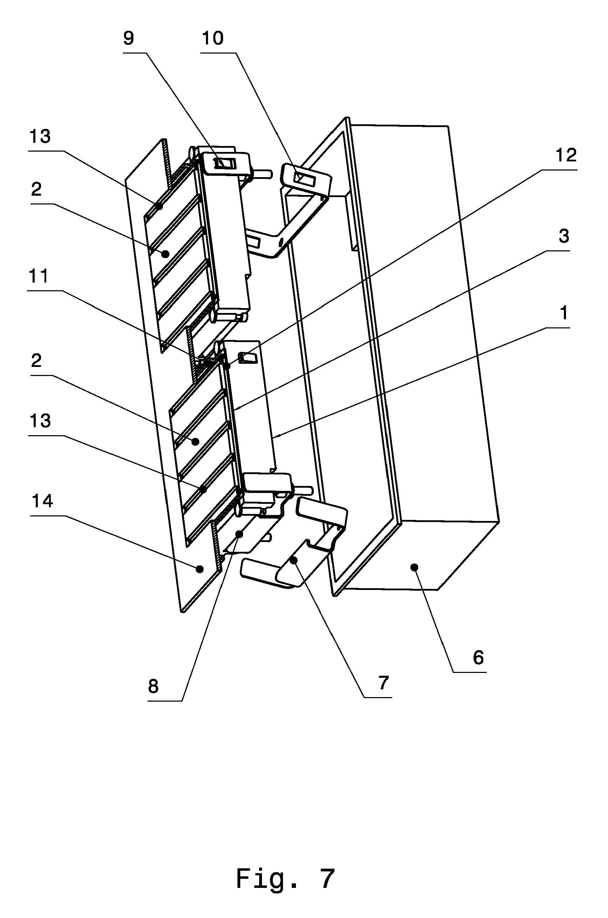

Lediglich beispielhaft ist in der Figur 7 ein zweites Ausführungsbeispiel dargestellt, wobei an der Designplatte 14 zwei Grundmodule 1 festgelegt sind, die jeweils ein Betätigungsmodul 3 aufweisen. Vorteilhafterweise braucht bei einer solchen Zweierkombination nur eines der Grundmodule 1 mit den Bauteilen (9,11) der Verriegelungseinrichtung bestückt werden.

### Bezugszeichenliste

- 1: Grundmodul
- 2: Betätigungsglied
- 3: Betätigungsmodul
- 4: Abschrägung
- 5: Leiterplatte
- 6: Installationsdose
- 7: Lagerbock
- 8: Lagerbockaufnahme
- 9: Riegel
- 10: Riegelfallen
- 11: Betätigungsmechanismus
- 12: Funktionsplatte
- 13: Blenden
- 14: Designplatte
- 15: Abstützfläche

## Patentansprüche

1. Elektrisches/elektronisches Installationsgerät der Gebäudesystemtechnik mit einem die zur Funktion notwendigen elektrischen/elektronischen Bauteile aufnehmenden, mit einer Designplatte ausrüstbaren Grundmodul, dem ein zumindest ein verstellbares, Betätigungsglied aufweisendes Betätigungsmodul zugeordnet ist, wobei das Grundmodul eine mit mehreren elektrischen Schaltelementen bestückte elektrische Leiterplatte aufweist, und wobei das Grundmodul über eine Befestigungsvorrichtung wieder entnehmbar in einer Installationsdose festlegbar ist, **dadurch gekennzeichnet, dass** die Befestigungsvorrichtung einerseits aus einem, zumindest einen Lagerbock (7) und zumindest eine Lagerbockaufnahme (8) aufweisenden Schwenklager und andererseits aus einer, zumindest zwei gegenläufig entgegen Federkraft verstellbare Riegel (9), zumindest zwei Riegelfallen (10) und einen Betätigungsmechanismus (11) aufweisende Verriegelungseinrichtung besteht.

2. Elektrisches/elektronisches Installationsgerät nach Anspruch 1, **dadurch gekennzeichnet, dass** zumindest ein Lagerbock (7) an der Installationsdose (6) und zumindest eine Lagerbockaufnahme (8) am Grundmodul (1) vorhanden sind.

3. Elektrisches/elektronisches Installationsgerät nach Anspruch 1 oder Anspruch 2, **dadurch gekennzeichnet, dass** zumindest zwei gegenläufig entgegen Federkraft verstellbare Riegel (9) verschieblich am Grundmodul (1) gelagert sind und dass zumindest zwei Riegelfallen (10) an der Installationsdose (6) vorhanden sind.

4. Elektrisches/elektronisches Installationsgerät nach einem der Ansprüche 1 bis 3, **dadurch gekennzeichnet, dass** zumindest ein Lagerbock (7) ein schneidenartiges Lagerelement aufweist, welches mit zumindest einer nutartig ausgebildeten Lagerbockaufnahme (8) zusammenwirkt.

5. Elektrisches/elektronisches Installationsgerät nach einem der Ansprüche 1 bis 4, **dadurch gekennzeichnet, dass** zumindest ein Lagerbock (7) als separat an der Installationsdose (6) festlegbares, aus Blech hergestelltes Stanzbiegeteil ausgeführt ist.

6. Elektrisches/elektronisches Installationsgerät nach einem der Ansprüche 1 bis 5, **dadurch gekennzeichnet, dass** zumindest eine Lagerbockaufnahme (8) einstückig im Grundmodul (1) vorhanden ist.

7. Elektrisches/elektronisches Installationsgerät nach einem der Ansprüche 1 bis 6, **dadurch gekennzeichnet, dass** das Betätigungsmodul (3) aus einer haltend mit dem Grundmodul (1) verbindbaren Funktionsplatte (12) zumindest einem verstellbar an der Funktionsplatte (12) gehaltenen, mit zumindest einem der elektrischen Schaltelemente zusammenwirkenden Betätigungsglied (2) und zumindest zwei, an der Funktionsplatte (12) festlegbaren Blenden (13) besteht.

8. Elektrisches/elektronisches Installationsgerät nach einem der Ansprüche 1 bis 7, **dadurch gekennzeichnet, dass** der Betätigungsmechanismus (11) der Verriegelungseinrichtung durch das Betätigungsmodul (3) verdeckt am Grundmodul (1) angeordnet ist.

9. Elektrisches/elektronisches Installationsgerät nach einem der Ansprüche 1 bis 8, **dadurch gekennzeichnet, dass** der Zugang zum Betätigungsmechanismus (11) der Verriegelungseinrichtung durch eine zumindest teilweise erfolgende Demontage des Betätigungsmoduls (3) freigegeben wird.

10. Elektrisches/elektronisches Installationsgerät nach Anspruch 9, **dadurch gekennzeichnet, dass** die Freigabe des Betätigungsmechanismus (11) der Verriegelungseinrichtung durch das Entfernen zumindest einer Blende (13) des Betätigungsmoduls (3) erfolgt.

11. Elektrisches/elektronisches Installationsgerät nach einem der Ansprüche 1 bis 10, **dadurch gekennzeichnet, dass** mehrere Grundmodule (1) als Geräteanordnung an einer einzigen Designplatte (14) befestigt sind, und dass zumindest ein Grundmodul (1) mit einem Betätigungsmodul (3) und zumindest ein Grundmodul (1) mit einem Audiomodul ausgerüstet ist.

12. Elektrisches/elektronisches Installationsgerät nach einem der Ansprüche 1 bis 11, **dadurch gekennzeichnet, dass** mehrere Grundmodule (1) als Geräteanordnung an einer einzigen Designplatte (14) befestigt sind, und dass zumindest ein Grundmodul (1) mit einem Betätigungsmodul (3) und zumindest ein Grundmodul (1) mit einem Videomodul ausgerüstet ist.

13. Elektrisches/elektronisches Installationsgerät nach einem der Ansprüche 1 bis 12, **dadurch gekennzeichnet, dass** mehrere Grundmodule (1) als Geräteanordnung an einer einzigen Designplatte (14) befestigt sind, und dass zumindest zwei Grundmodule (1) jeweils mit einem Betätigungsmodul (3) ausgerüstet sind.
